# EUROPEAN PATENT APPLICATION

(11) **EP 4 852 102 A1**
(43) Date of publication of application: **09.12.2026**
(21) Application number: 24922528.5
(22) Date of filing: 05.08.2024
(51) Int. Cl.: H01M 4/86, H01M 8/0267, H01M 8/04082, H01M 8/04007, H01M 8/249, H01M 8/2425, H01M 8/248, C25B 13/07, C25B 1/04, C25B 9/63

(54) **ELECTRODE MODULE AND ELECTROCHEMICAL SYSTEM INCLUDING SAME**

(30) Priority: 01.02.2024 KR 20240016030
(71) Applicant: SAMSUNG E&A CO., LTD., Gangdong-gu, Seoul 05288 (KR)
(72) Inventor: KIM, Kyung Jun, Seoul 05288 (KR); KSHETRIMAYUM, Krishnadash Singh, Seoul 05288 (KR); HA, Gyun Ho, Seoul 05288 (KR); HEO, Yeon Hyuk, Seoul 05288 (KR)
(74) Representative: Santarelli
(86) International application number: PCT/KR2024/011475
(87) International publication number: WO 2025/164862

(57) **Abstract**

Disclosed are an electrode module and an electrochemical system including the same. The electrode module disclosed herein includes an inlet for a first fluid, a recuperator in fluid communication with the inlet for the first fluid, an electric heater in fluid communication with the recuperator, a supply pipe for the first fluid, in fluid communication with the electric heater, a stack mounting portion in fluid communication with the supply pipe for the first fluid, a discharge means for a second fluid, in fluid communication with the stack mounting portion, and an outlet for the second fluid, in fluid communication with the discharge means for the second fluid via the recuperator, wherein the recuperator is configured to exchange heat between the first fluid and the second fluid.

## Description

### Technical Field

Disclosed are an electrode module and an electrochemical system including the same. More specifically, disclosed are an expandable electrode module integrating a manifold for parallel connection of solid oxide fuel cells or stacks, a high-temperature recuperator for maintaining high-temperature operation, and an electric heater, and an electrochemical system including the same.

### Background Art

Although there are numerous commercialization examples of existing hot boxes for high-temperature fuel cells (which include natural/city gas reformers and burners), there has been a problem in that they were of small capacity and could not be used for pure hydrogen fuel cells or water electrolysis applications that do not include reformers and burners.

The capacity of a high-temperature stack currently being applied in the demonstration phase is at the level of 3 to 10 kW, which is significantly lower than the capacity (1 MW to 10 MW) of a low-temperature stack in terms of hydrogen productivity. Furthermore, the capacity of a high-temperature water electrolysis hot box currently in the demonstration phase is at the level of several tens of kW domestically and several hundreds of kW internationally, which falls significantly short of commercialization standards.

Since a high-temperature stack, a recuperator, and an electric heater operate at high temperatures of 550 to 800 °C, substantial heat loss may occur when they are exposed to outside air, thereby sharply reducing hydrogen production efficiency.

Furthermore, currently used hot boxes often have a recuperator, an electric heater, and a high-temperature piping network disposed outside a thermal insulation, and thus do not achieve a commercially viable level of hydrogen production efficiency.

### Disclosure of Invention

### Technical Problem

An embodiment of the present disclosure provides an expandable electrode module integrating a manifold for parallel connection of solid oxide fuel cells or stacks, a high-temperature recuperator for maintaining high-temperature operation, and an electric heater.

Another embodiment of the present disclosure provides an electrochemical system including the electrode module.

### Solution to Problem

According to an aspect of the disclosure,
an electrode module includes an inlet for a first fluid;
a recuperator in fluid communication with the inlet for the first fluid;
an electric heater in fluid communication with the recuperator;
a supply pipe for the first fluid in fluid communication with the electric heater;
a stack mounting portion in fluid communication with the supply pipe for the first fluid;
a discharge means for a second fluid in fluid communication with the stack mounting portion; and
an outlet for the second fluid in fluid communication with the discharge means for the second fluid via the recuperator,
wherein the recuperator is configured to exchange heat between the first fluid and the second fluid.

The inlet for the first fluid and the outlet for the second fluid may be arranged to be fluidly separated from each other and in close contact with each other.

A plurality of stack mounting portions may be provided, and in this case, the plurality of stack mounting portions may be divided into a first row of stack mounting portions and a second row of stack mounting portions arranged symmetrically on left and right sides, a pair of the supply pipes for the first fluid may be arranged in parallel between the first row of stack mounting portions and the second row of stack mounting portions, and a pair of the discharge means for the second fluid may be arranged in parallel, one outside the first row of stack mounting portions and the other outside the second row of stack mounting portions when observed with respect to the supply pipe for the first fluid.

According to another aspect of the disclosure,

An electrochemical system includes the above-described electrode module; and
a stack.

According to another aspect of the disclosure,

An electrode module includes a steam inlet;
a fuel electrode recuperator in fluid communication with the steam inlet;
a fuel electrode electric heater in fluid communication with the fuel electrode recuperator;
a steam supply pipe in fluid communication with the fuel electrode electric heater;
a fuel electrode stack mounting portion in fluid communication with the steam supply pipe;
a steam supply nozzle in fluid communication with the fuel electrode stack mounting portion;
a hydrogen discharge nozzle in fluid communication with the fuel electrode stack mounting portion;
a hydrogen discharge pipe in fluid communication with the fuel electrode stack mounting portion; and
a hydrogen outlet in fluid communication with the hydrogen discharge pipe via the fuel electrode recuperator,
wherein the fuel electrode recuperator is configured to exchange heat between steam introduced through the steam inlet and hydrogen discharged from the hydrogen discharge pipe.

The fuel electrode stack mounting portion may include a steam supply passage and a hydrogen discharge passage fluidly separated from each other, the steam supply passage may be configured to connect the steam supply pipe and the steam supply nozzle to each other, and the hydrogen discharge passage may be configured to connect the hydrogen discharge nozzle and the hydrogen discharge pipe to each other.

Each of the steam supply nozzle and the hydrogen discharge nozzle may be disposed on an upper surface of the fuel electrode stack mounting portion.

According to another aspect of the disclosure,

An electrode module includes an outside air inlet;
an air electrode recuperator in fluid communication with the outside air inlet;
an air electrode electric heater in fluid communication with the air electrode recuperator;
an outside air supply pipe in fluid communication with the air electrode electric heater;
an air electrode stack mounting portion in fluid communication with the outside air supply pipe;
an exhaust air passage in fluid communication with the air electrode stack mounting portion; and
an exhaust air outlet in fluid communication with the exhaust air passage via the air electrode recuperator,
wherein the air electrode recuperator is configured to exchange heat between outside air introduced through the outside air inlet and exhaust air discharged from the exhaust air passage.

A plurality of air electrode stack mounting portions may be provided, and in this case, the electrode module may further include a plurality of air guides configured to, together with the outside air supply pipe, individually define the plurality of air electrode stack mounting portions.

The electrode module may further include a compression rod disposed between two of the air guides adjacent to each other.

According to another aspect of the disclosure,
an electrochemical system includes a fuel electrode module including the above-described electrode module;
an air electrode module including the above-described electrode module; and
a stack.

The air electrode module may be disposed on the fuel electrode module, and a pair of side panels disposed on the fuel electrode module may be further included to cover one side surface and the other side surface of the air electrode module.

The air electrode module may further include a compression rod arranged to penetrate both the air electrode module and the fuel electrode module.

The electrochemical system may further include a first nut coupled to one end of the compression rod toward the air electrode module, a spring coupled to the other end of the compression rod toward the fuel electrode module, and a second nut coupled to the other end of the compression rod to compress the spring.

The electrochemical system may be a solid oxide fuel cell system or a solid oxide water electrolysis system.

### Advantageous Effects of Invention

An electrode module and an electrochemical system including the same according to an embodiment of the present disclosure achieve integration of a high-temperature solid oxide fuel cell or water electrolysis system, which is a high-efficiency solid oxide fuel cell or water electrolysis technology, thereby significantly reducing the construction cost of a high-capacity solid oxide fuel cell or water electrolysis system, and can also maximize the thermal efficiency of the solid oxide fuel cell or water electrolysis system through increased thermal insulation effect due to the integration.

In addition, an electrode module according to an embodiment of the present disclosure is manufactured in the form of a platform, and thus a plurality of stacks can be connected or stacked in series and/or in parallel.

### Brief Description of Drawings

FIG. 1 is a perspective view schematically showing a fuel electrode module as an electrode module according to an embodiment of the present disclosure.
FIG. 2 is a plan view of an electrochemical system including a stacked structure of a fuel electrode module and an air electrode module as electrode modules according to embodiments of the present disclosure.
FIG. 3 is a perspective view of an electrochemical system including a stacked structure of a fuel electrode module and an air electrode module as electrode modules according to embodiments of the present disclosure.
FIG. 4 is a view showing the electrochemical system of FIG. 3 provided with additional stacks.
FIG. 5 is a side view of the electrochemical system of FIG. 4.
FIG. 6 is a view showing only the fuel electrode current collectors, busbars, and air electrode current collectors from the electrochemical system of FIG. 5.
FIG. 7 is a view showing the electrochemical system of FIG. 4 provided with side panels.
FIG. 8 is a view showing the electrochemical system of FIG. 7 provided with additional compression plates.
FIG. 9 is a side view showing a state in which the electrochemical system of FIG. 8 is compressed by a stack compression system.
FIG. 10 is a view showing a state in which only the stacks are removed from the electrochemical system of FIG. 7, and is a view for explaining a fluid flow in the air electrode module.
FIG. 11 is an enlarged view of an air guide installation unit in the electrochemical system of FIG. 10.
FIG. 12 is a diagram showing several connection methods of an electrochemical system according to an embodiment of the present disclosure.

### Mode for the Invention

Hereinafter, an electrode module according to an embodiment of the present disclosure and an electrochemical system including the same will be described in detail.

In the present specification, "outside air" refers to all air existing between an outside air inlet and a stack, and "exhaust air" refers to all air existing between a stack and an exhaust port.

Additionally, in the present specification, "fluid communication" means that two or more members are connected such that fluid can flow through insides thereof.

Additionally, in the present specification, "fluidly separated" means that two or more members are configured such that fluid does not flow from one member to another.

Additionally, in the present specification, "arranged in parallel" means that two or more members are arranged such that their smooth surfaces (widest surfaces) face each other with respect to an imaginary vertical line.

Additionally, in the present specification, "arranged in series" means that two or more members are arranged side by side in a longitudinal direction on the same straight line so as to extend in one direction.

Additionally, in the present specification, "upper portion" refers to a portion relatively located opposite to the direction of gravity, and "lower portion" refers to a portion relatively located in the direction of gravity.

Additionally, in the present specification, "upper surface" refers to a surface seen when looking down an object from the top to the bottom, and "lower surface" refers to a surface seen when looking up the object from the bottom to the top.

An electrode module according to an embodiment of the present disclosure includes an inlet for a first fluid, a recuperator, an electric heater, a supply pipe for the first fluid, a stack mounting portion, a discharge means for a second fluid, and an outlet for the second fluid.

In the present specification, the term "stack connection portion 115" collectively refers to a portion on or to which a stack is mounted or connected, and may include a fuel electrode stack mounting portion STS1 and an air electrode stack mounting portion STS2 described below.

The recuperator may be in fluid communication with the inlet for the first fluid.

In addition, the recuperator may be configured to exchange heat between the first fluid and the second fluid.

The electric heater may be in fluid communication with the recuperator.

The supply pipe for the first fluid may be in fluid communication with the electric heater.

The stack mounting portion may be in fluid communication with the supply pipe for the first fluid.

In addition, a plurality of stack mounting portions are provided, and in this case, the plurality of stack mounting portions may be divided into a first row of stack mounting portions and a second row of stack mounting portions arranged symmetrically on left and right sides.

The first row of stack mounting portions and the second row of stack mounting portions may each include a plurality of stack mounting portions arranged in single file. In this case, a pair of the supply pipes for the first fluid may be arranged in parallel between the first row of stack mounting portions and the second row of stack mounting portions. Additionally, in this case, a pair of the discharge means for the second fluid may be arranged in parallel, one outside the first row of stack mounting portions and the other outside the second row of stack mounting portions when observed with respect to the supply pipe for the first fluid.

The discharge means for the second fluid may be in fluid communication with the stack mounting portion.

Additionally, the outlet for the second fluid may be in fluid communication with the discharge means for the second fluid via the recuperator. Specifically, the outlet for the second fluid may be in fluid communication with the recuperator, and the recuperator may be in fluid communication with the discharge means for the second fluid, so that as a result, the outlet for the second fluid may be in fluid communication with the discharge means for the second fluid.

The inlet for the first fluid and the outlet for the second fluid may be arranged so as to be fluidly separated from each other and in close contact with each other.

Another embodiment of the present disclosure provides an electrochemical system including the above-described electrode module and a stack.

The electrode module may be an electrode module applied to a solid oxide fuel cell system or a solid oxide water electrolysis system, and the electrochemical system may be a solid oxide fuel cell system or a solid oxide water electrolysis system. Hereinafter, the above-described electrode module will be described in detail with reference to the drawings, based on an electrode module applied to a solid oxide water electrolysis system. However, the electrode module may also be applied to a solid oxide fuel cell in substantially the same manner, as would be apparent to those skilled in the art.

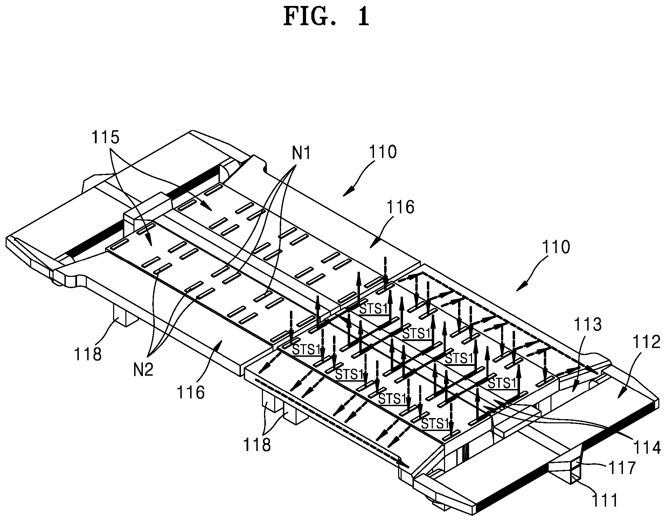

FIG. 1 is a perspective view schematically showing a fuel electrode module 110 as an electrode module according to an embodiment of the present disclosure. In FIG. 1, two fuel electrode modules (110) having the same configuration and function are arranged in opposite directions to each other.

Referring to FIG. 1, a fuel electrode module 110 includes a steam inlet 111, a fuel electrode recuperator 112, a fuel electrode electric heater 113, a steam supply pipe 114, fuel electrode stack mounting portions STS1, steam supply nozzles N1, hydrogen discharge nozzles N2, hydrogen discharge pipes 116, and a hydrogen outlet 117.

The fuel electrode recuperator 112 may be in fluid communication with the steam inlet 111.

Additionally, the fuel electrode recuperator 112 may be configured to exchange heat between the steam introduced through the steam inlet 111 and the hydrogen discharged from the hydrogen discharge pipes 116. Specifically, the fuel electrode recuperator 112 may be configured to exchange heat between the steam introduced through the steam inlet 111 and the hydrogen discharged from the hydrogen discharge pipes 116 to heat the steam and cool the hydrogen. Accordingly, energy efficiency can be maximized through heat exchange between the steam introduced through the steam inlet 111 and the hydrogen discharged from the hydrogen discharge pipes 116, and heat loss due to outside air can be minimized by not discharging a high-temperature fluid to the outside of a thermal insulation 200 to be described later.

The fuel electrode electric heater 113 may be in fluid communication with the fuel electrode recuperator 112. Specifically, the fuel electrode electric heater 113 may be configured to further heat the steam supplied through the fuel electrode recuperator 112. More specifically, the fuel electrode electric heater 113 may be mounted into the end of the fuel electrode recuperator 112 and maintains the temperature of a fluid uniformly under various operating conditions (heat generation/neutral/heat absorption) of stacks 130 to be described later, thereby actively controlling the temperature of the stacks 130 and increasing the lifespan of the stacks 130.

The steam supply pipe 114 may be in fluid communication with the fuel electrode electric heater 113. Specifically, the steam supply pipe 114 may be configured to resupply the steam supplied through the fuel electrode electric heater 113 to the fuel electrode stack mounting portion STS1.

The fuel electrode stack mounting portion STS1 may be in fluid communication with the steam supply pipe 114.

In addition, a plurality of the fuel electrode stack mounting portions STS1 may be provided. In this case, the plurality of fuel electrode stack mounting portions STS1 may be divided into a first row of fuel electrode stack mounting portions STS1 and a second row of fuel electrode stack mounting portions STS1 arranged symmetrically on left and right sides.

The first row of fuel electrode stack mounting portions STS1 and the second row of fuel electrode stack mounting portions STS1 may each include a plurality of fuel electrode stack mounting portions STS1 arranged in single file. In this case, a pair of the steam supply pipes 114 may be arranged in parallel between the first row of fuel electrode stack mounting portions STS1 and the second row of fuel electrode stack mounting portions STS1. Additionally, in this case, a pair of the hydrogen discharge pipes 116 may be arranged in parallel, one outside the first row of fuel electrode stack mounting portions STS1 and the other outside the second row of fuel electrode stack mounting portions STS1 when observed with respect to the steam supply pipe 114.

Additionally, the fuel electrode stack mounting portions STS1 may include steam supply passages (not shown) and hydrogen discharge passages (not shown) that are fluidly separated from each other.

The steam supply passages may be configured to connect the steam supply pipe 114 and the steam supply nozzles N1 to each other. Accordingly, the steam supplied to the fuel electrode module 110 through the steam inlet 111 may sequentially pass through the fuel electrode recuperator 112, the fuel electrode electric heater 113, the steam supply pipe 114, and the steam supply passages formed in the fuel electrode stack mounting portions STS1, and may then be supplied, through the steam supply nozzles N1, to the stacks 130 described below and disposed above the fuel electrode stack mounting portions STS1 (refer to solid arrows in FIG. 1) .

The hydrogen discharge passages may be configured to connect the hydrogen discharge nozzles N2 and the hydrogen discharge pipes 116 to each other. Accordingly, the hydrogen discharged from the stacks 130 described below may pass through the hydrogen discharge nozzles N2, the hydrogen discharge passages formed in the fuel electrode stack mounting portions STS1, the hydrogen discharge pipes 116, and the fuel electrode recuperator 112 in this order, and may then be discharged to the outside of the fuel electrode module 110 through the hydrogen outlet 117 (refer to dotted arrows in FIG. 1).

In addition, the steam supply nozzles N1 and the hydrogen discharge nozzles N2 may each be arranged on the upper surfaces of the fuel electrode stack mounting portions STS1. For example, a row of the steam supply nozzles N1 and a row of the hydrogen discharge nozzles N2 may be alternately arranged on the upper surfaces of the fuel electrode stack mounting portions STS1.

Additionally, the fuel electrode module 110 may further include a plurality of legs 118.

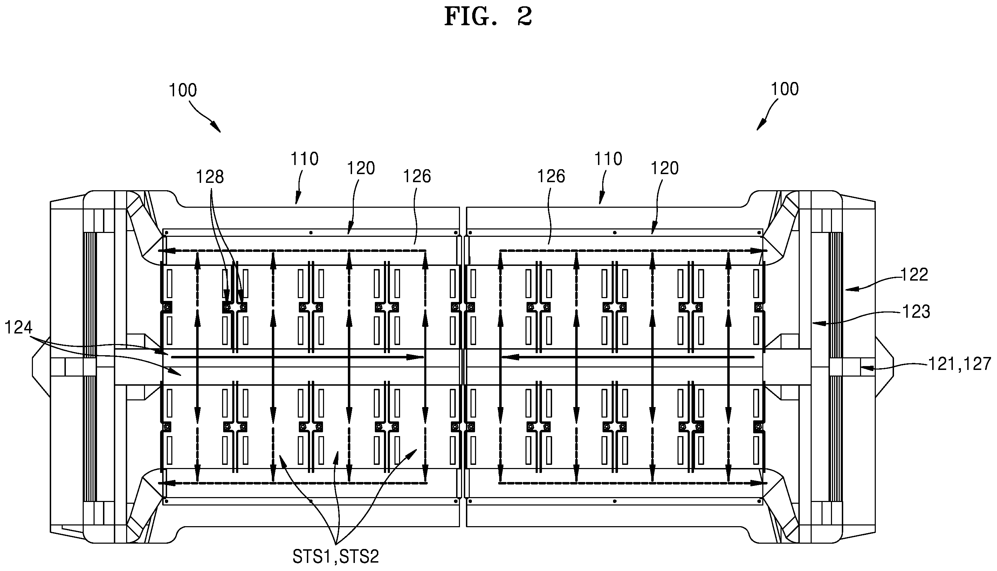

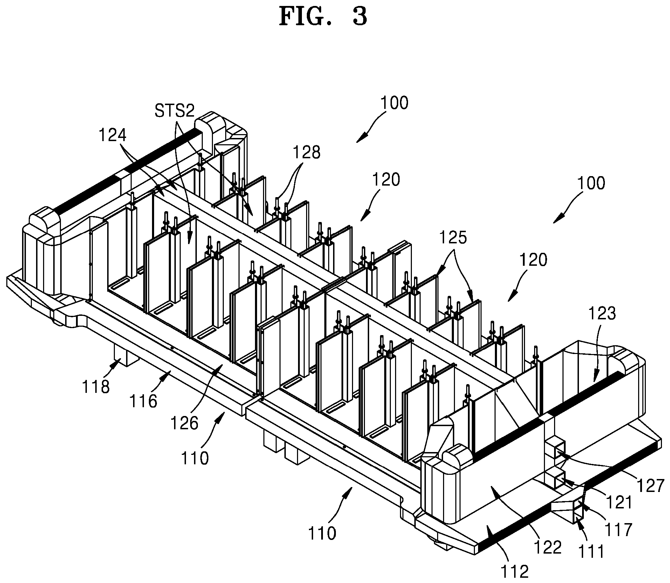

FIG. 2 is a plan view of an electrochemical system 100 including a stacked structure of a fuel electrode module 110 and an air electrode module 120 as electrode modules according to embodiments of the present disclosure, and FIG. 3 is a perspective view of an electrochemical system 100 including a stacked structure of a fuel electrode module 110 and an air electrode module 120 as electrode modules according to embodiments of the present disclosure. In FIGS. 2 and 3, two stacked structures having the same configuration and function (that is, each stacked structure of a fuel electrode module 110 and an air electrode module 120) are arranged in opposite directions to each other.

Referring to FIGS. 2 and 3, the air electrode module 120 may be disposed on the fuel electrode module 110.

Additionally, the air electrode module 120 includes an outside air inlet 121, an air electrode recuperator 122, an air electrode electric heater 123, an outside air supply pipe 124, air electrode stack mounting portions STS2, exhaust air passages 126, and an exhaust air outlet 127.

The air electrode recuperator 122 may be in fluid communication with the outside air inlet 121.

Additionally, the air electrode recuperator 122 may be configured to exchange heat between the outside air introduced through the outside air inlet 121 and the exhaust air discharged from the exhaust air passages 126. Specifically, the air electrode recuperator 122 may be configured to exchange heat between the outside air introduced through the outside air inlet 121 and the exhaust air discharged from the exhaust air passages 126 to heat the outside air and cool the exhaust air. Accordingly, energy efficiency can be maximized through heat exchange between the outside air introduced through the outside air inlet 121 and the exhaust air discharged from the exhaust air passages 126, and heat loss due to outside air can be minimized by not discharging a high-temperature fluid to the outside of a thermal insulation 200 to be described later.

The air electrode electric heater 123 may be in fluid communication with the air electrode recuperator 122. Specifically, the air electrode electric heater 123 may be configured to further heat the outside air supplied through the air electrode recuperator 122. More specifically, the air electrode electric heater 123 may be mounted into the end of the air electrode recuperator 122 and maintains the temperature of a fluid uniformly under various operating conditions (heat generation/neutral/heat absorption) of stacks 130 to be described later, thereby actively controlling the temperature of the stacks 130 and increasing the lifespan of the stacks 130.

The outside air supply pipe 124 may be in fluid communication with the air electrode electric heater 123. Specifically, the outside air supply pipe 124 may be configured to resupply the outside air supplied through the air electrode electric heater 123 to the air electrode stack mounting portion STS2.

The air electrode stack mounting portion STS2 may be in fluid communication with the outside air supply pipe 124.

In addition, a plurality of the air electrode stack mounting portions STS2 may be provided. In this case, each air electrode stack mounting portion STS2 is an inner space surrounded by a plurality of air guides 125 to be described later and the outside air supply pipe 124, and may be configured to accommodate one stack 130 to be described later.

Additionally, the air electrode module 120 may include a plurality of air guides 125. The plurality of air guides 125 may be configured, together with the outside air supply pipe 124, to individually define the plurality of air electrode stack mounting portions STS2. Accordingly, these air electrode stack mounting portions STS2 may be divided into a first row of air electrode stack mounting portions STS2 and a second row of air electrode stack mounting portions STS2 arranged symmetrically on left and right sides. Additionally, the plurality of air guides 125 serve to distribute the outside air evenly to the plurality of air electrode stack mounting portions STS2.

The first row of air electrode stack mounting portions STS2 and the second row of air electrode stack mounting portions STS2 may each include a plurality of air electrode stack mounting portions STS2 arranged in single file. In this case, a pair of the outside air supply pipes 124 may be arranged in parallel between the first row of air electrode stack mounting portions STS2 and the second row of air electrode stack mounting portions STS2. Additionally, in this case, a pair of the exhaust air passages 126 may be arranged in parallel, one outside the first row of air electrode stack mounting portions STS2 and the other outside the second row of air electrode stack mounting portions STS2 when observed with respect to the outside air supply pipe 124.

The exhaust air passages 126 may each be an internal space between a stack 130 and the corresponding side panel 150, which will be described later (refer to FIGS. 2 to 4, FIG. 7, FIG. 8 and FIG. 10).

Additionally, the air electrode module 120 may further include compression rods 128. These compression rods 128 may be disposed between two air guides 125 adjacent to each other, and may be disposed to penetrate both the fuel electrode module 110 and the air electrode module 120.

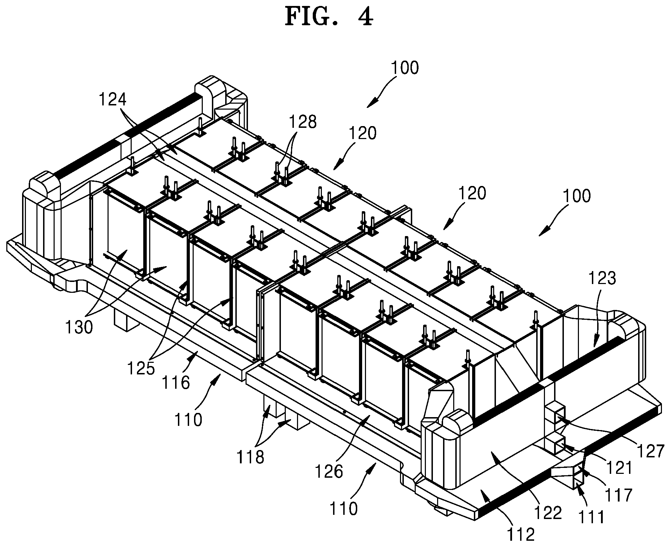

FIG. 4 is a view showing the electrochemical system 100 of FIG. 3 provided with additional stacks 130.

Referring to FIG. 4, the stack 130 may be mounted in an inner space surrounded by the fuel electrode stack mounting portion STS1 of the fuel electrode module 110, the plurality of air guides 125, and the outside air supply pipe 124. As a result, the plurality of stacks 130 may be arranged in parallel in n rows (n is an integer of 1 or more), and theoretically, an infinite number of stacks 130 may be arranged. This stack 130 may be a water electrolysis stack (refer to https://en.wikipedia.org/wiki/Solid_oxide_electrolyzer_cell).

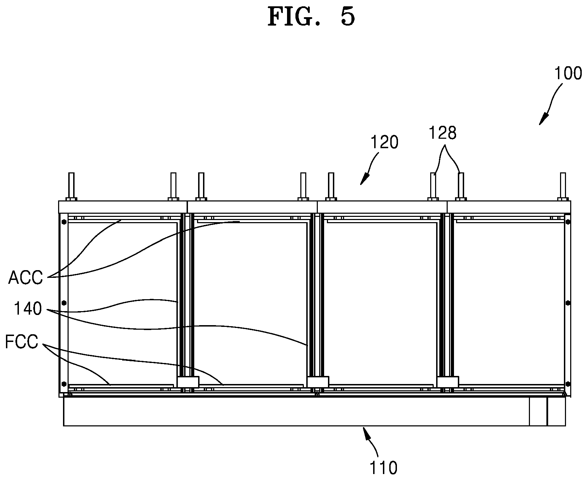

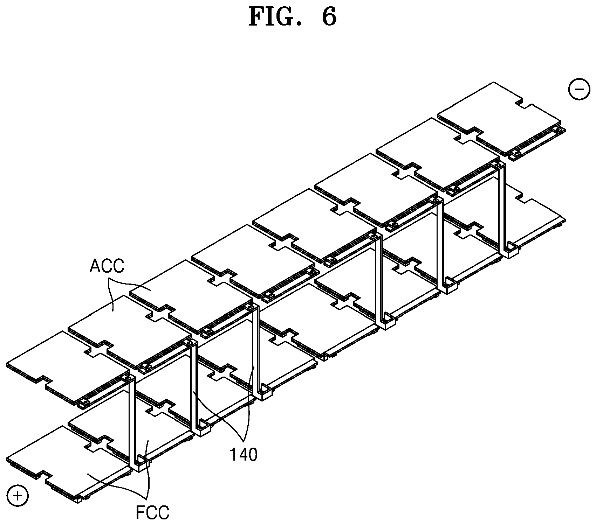

FIG. 5 is a side view of the electrochemical system 100 of FIG. 4, and FIG. 6 is a view showing only the fuel electrode current collectors FCC, busbars 140, and air electrode current collectors ACC extracted from the electrochemical system 100 of FIG. 5.

Referring to FIGS. 5 and 6, the busbars 140 perform a function of electrically connecting the air electrode current collectors ACC and the fuel electrode current collectors FCC in a "Z" shape to prevent interference with the air electrode module 120 after installation of the air electrode module 120.

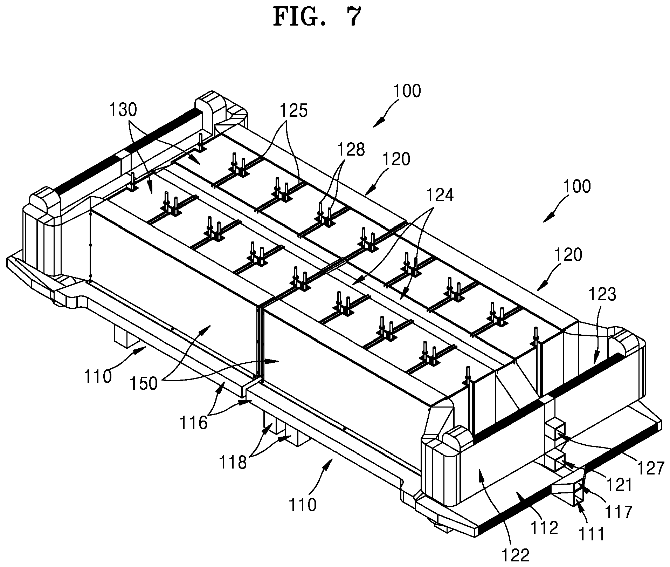

FIG. 7 is a view showing the electrochemical system 100 of FIG. 4 provided with side panels 150.

As shown in FIG. 7, the electrochemical system 100 may further include side panels 150.

The side panels 150 may be disposed on the fuel electrode module 110 to cover one side surface and the other side surface of the air electrode module (120), respectively. These side panels 150 serve to block the inside of the stack 130 from the outside.

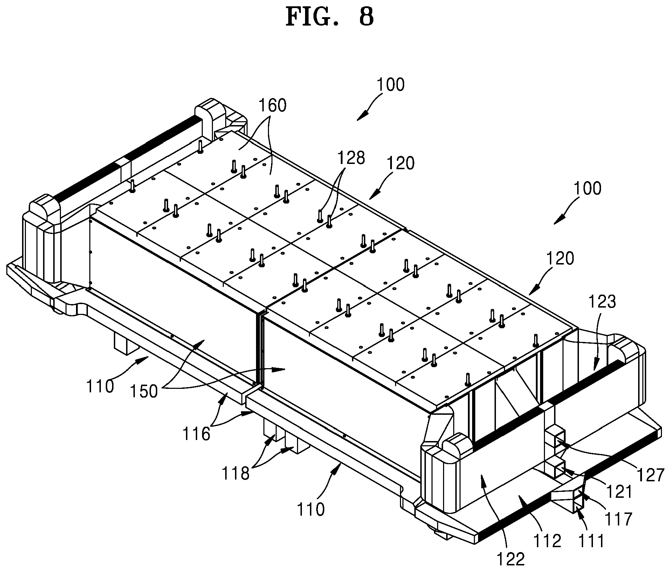

FIG. 8 is a view showing the electrochemical system 100 of FIG. 7 provided with additional compression plates 160.

Referring to FIG. 8 together with FIG. 7, the compression plates 160 may be arranged to cover the stacks 130. These compression plates 160 serve to prevent damage to the stacks 130 when the electrochemical system 100 is compressed vertically.

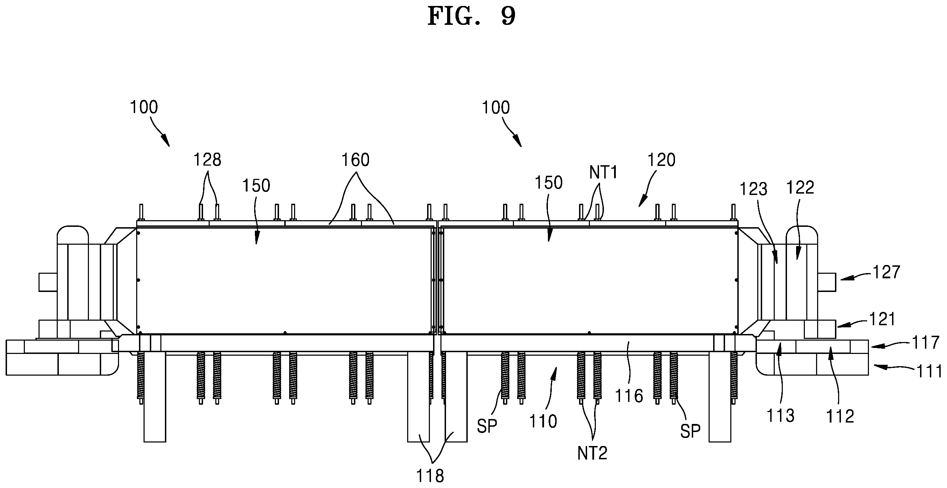

FIG. 9 is a side view showing a state in which the electrochemical system 100 of FIG. 8 is compressed by a stack compression system (128, 160, NT1, SP, NT2, and the like).

The stack compression system (128, 160, NT1, SP, NT2, and the like) provides a compressive force for sealing the stacks 130 and surroundings thereof, thereby serving to maintain the durability of the stacks 130 even during high-temperature thermal expansion or contraction.

Referring to FIG. 9, the electrochemical system 100 may further include a first nut NT1, a spring SP, and a second nut NT2.

The first nut NT1 may be coupled to one end of the compression rod 128 toward the air electrode module 120.

The spring SP may be coupled to the other end of the compression rod 128 toward the fuel electrode module 110.

The second nut NT2 may be coupled to the other end of the compression rod 128 to compress the spring SP.

Specifically, in the electrochemical system (100) of FIG. 8, the fuel electrode module 110 and the air electrode module 120 are aligned, a washer (not shown) and the nut NT1 are sequentially fastened to the upper portion of the compression rod 128, and then the spring SP, a washer (not shown), and the nut NT2 are sequentially fastened to the lower portion of the compression rod 128, so that the electrochemical system 100 may be compressed vertically. In this way, it is possible to prevent a fluid from leaking from the inside to the outside of the stack 130 by compressing the electrochemical system 100 with an appropriate compressive force.

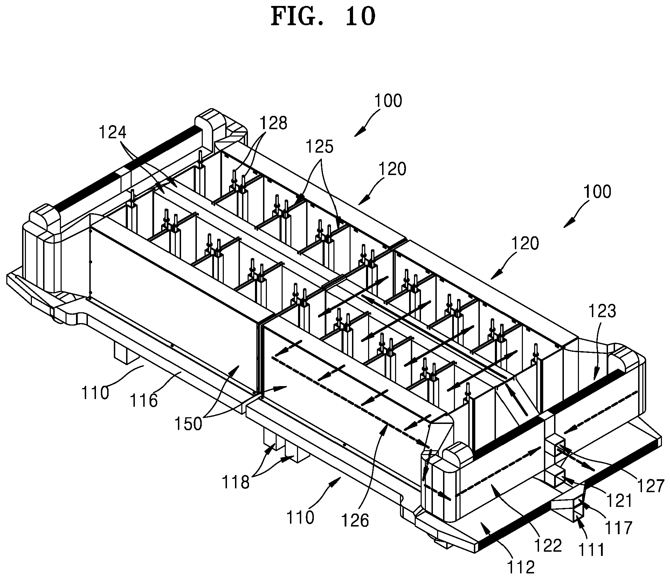

FIG. 10 is a view showing a state in which only the stacks 130 are removed from the electrochemical system of FIG. 7, and is a view for explaining a fluid flow in the air electrode module 120.

Referring to FIG. 10, the outside air supplied to the air electrode module 120 through the outside air inlet 121 may sequentially pass through the air electrode recuperator 122, the air electrode electric heater 123, the outside air supply pipe 124, and the air electrode stack mounting portions STS2, and may then be supplied to the stacks 130 mounted in the air electrode stack mounting portions STS2 (refer to solid arrows in FIG. 10) .

Additionally, the exhaust air discharged from the stacks 130 may sequentially pass the air electrode stack mounting portions STS2, the exhaust air passages 126, and the air electrode recuperator 122, and may then be discharged to the outside of the air electrode module 120 through the exhaust air outlet 127 (refer to dotted arrows in FIG. 10).

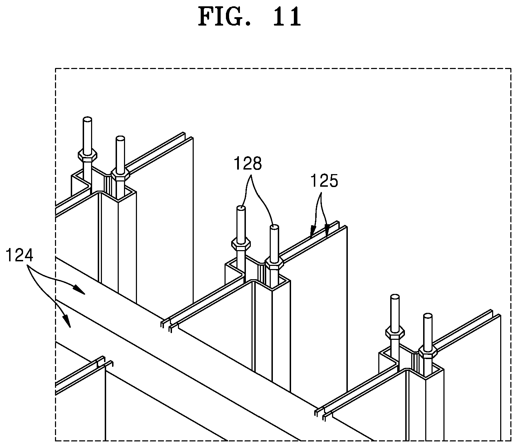

FIG. 11 is an enlarged view of an air guide installation unit in the electrochemical system of FIG. 10.

Referring to FIG. 11, multiple pairs of air guides 125 are arranged in pairs, and two compression rods 128 may be arranged in the space between a pair of air guides 125. In addition, each of the air guides 125 may include a curved portion to secure the installation space for the compression rod 128.

Although not shown in the drawings, the electrochemical system 100 may further include power cables and connection terminals for supplying power to the stacks 130, and sensing cables and connection terminals for monitoring the stacks 130.

The fuel electrode module 110, air electrode module 120, and electrochemical system 100 according to an embodiment of the present disclosure, each having the above configuration, can maintain thermal homeostasis through the integration of components and have a piping network for equal fuel and air distribution between the stacks 130. That is, the fuel electrode module 110, the air electrode module 120, and the electrochemical system 100 are configured such that the components are arranged within the smallest possible space for high-capacity integration and are easy to mount within a thermal insulation 200, and have a shape that allows two or more to be stacked for future industrialization.

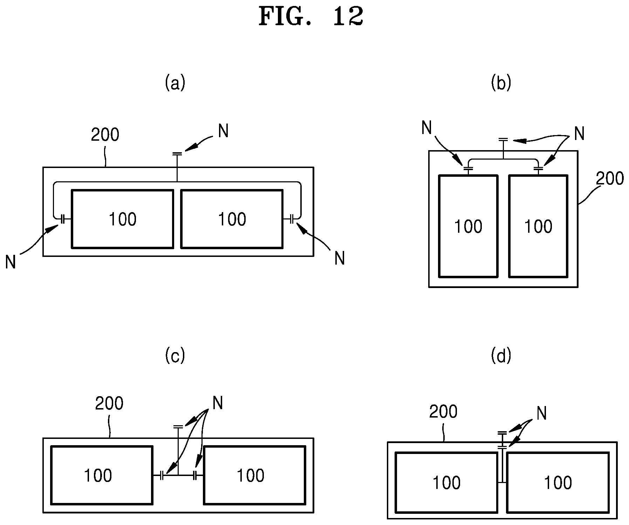

FIG. 12 is a diagram showing several connection methods of an electrochemical system 100 according to an embodiment of the present disclosure. In FIG. 12, the reference numeral "100" represents an electrochemical system, "N" represents a nozzle such as a fluid inlet and a fluid outlet, and "200" represents a thermal insulation.

Referring to (a) of FIG. 12, a pair of electrochemical systems 100 surrounded by a thermal insulation 200 are connected in series in opposite directions to each other such that nozzles N are located furthest apart from each other. Here, the thermal insulation 200 may surround the electrochemical systems 100 to minimize the heat loss of the electrochemical systems 100 and thermal shock of the stacks 130 caused by the outside air.

Referring to (b) of FIG. 12, a pair of electrochemical systems 100 surrounded by a thermal insulation 200 are connected in parallel.

Referring to (c) of FIG. 12, a pair of electrochemical systems 100 surrounded by a thermal insulation 200 are connected in series in opposite directions to each other such that nozzles N are located nearest to each other.

Referring to (d) of FIG. 12, a pair of electrochemical systems 100 surrounded by a thermal insulation 200 are connected in series in opposite directions to each other to share nozzles N.

The above-described electrochemical system 100 may be a solid oxide fuel cell system or a solid oxide water electrolysis system.

The present disclosure has been described with reference to the drawings, but this is merely illustrative, and those skilled in the art will understand that various modifications and equivalent alternative embodiments are possible therefrom. Therefore, the true technical protection scope of the present disclosure should be determined by the technical concept of the appended claims.

**List of Reference Numerals for Major Elements**

| | | | |
|---|---|---|---|
| 100: | Electrochemical system | 110: | Fuel electrode module |
| 111: | Steam inlet | 112: | Fuel electrode recuperator |
| 113: | Fuel electrode electric heater | 114: | Steam supply pipe |
| 115: | Stack connection portion | 116: | Hydrogen discharge pipe |
| 117: | Hydrogen outlet | 118: | Leg |
| 120: | Air electrode module | 121: | Outside air inlet |
| 122: | Air electrode recuperator | 123: | Air electrode electric heater |
| 124: | Outside air supply pipe | 125: | Air guide |
| 126: | Exhaust air passage | 127: | Exhaust air outlet |
| 128: | Compression rod | 130: | Stack |
| 140: | Busbar | 150: | Side panel |
| 160: | Compression plate | 200: | Thermal insulation |
| STS1, STS2: | Stack mounting portion | N1: | Steam supply nozzle |
| N2: | Hydrogen discharge nozzle | NT1, NT2: | Nut |
| N: | Nozzle | SP: | Spring |
| ACC: | Air electrode current collector | | |
| FCC: | Fuel electrode current collector | | |

## Claims

1. An electrode module comprising: an inlet for a first fluid;
a recuperator in fluid communication with the inlet for the first fluid;
an electric heater in fluid communication with the recuperator;
a supply pipe for the first fluid, in fluid communication with the electric heater;
a stack mounting portion in fluid communication with the supply pipe for the first fluid;
a discharge means for a second fluid, in fluid communication with the stack mounting portion; and
an outlet for the second fluid, in fluid communication with the discharge means for the second fluid via the recuperator,
wherein the recuperator is configured to exchange heat between the first fluid and the second fluid.

2. The electrode module of claim 1,
wherein the inlet for the first fluid and the outlet for the second fluid are arranged to be fluidly separated from each other and in close contact with each other.

3. The electrode module of claim 1,
wherein a plurality of stack mounting portions are provided, and in this case, the plurality of stack mounting portions are divided into a first row of stack mounting portions and a second row of stack mounting portions arranged symmetrically on left and right sides, a pair of the supply pipes for the first fluid are arranged in parallel between the first row of stack mounting portions and the second row of stack mounting portions, and a pair of the discharge means for the second fluid are arranged in parallel, one outside the first row of stack mounting portions and the other outside the second row of stack mounting portions when observed with respect to the supply pipe for the first fluid.

4. An electrochemical system comprising: the electrode module of any one of claims 1 to 3; and
a stack.

5. An electrode module comprising: a steam inlet;
a fuel electrode recuperator in fluid communication with the steam inlet;
a fuel electrode electric heater in fluid communication with the fuel electrode recuperator;
a steam supply pipe in fluid communication with the fuel electrode electric heater;
a fuel electrode stack mounting portion in fluid communication with the steam supply pipe;
a steam supply nozzle in fluid communication with the fuel electrode stack mounting portion;
a hydrogen discharge nozzle in fluid communication with the fuel electrode stack mounting portion;
a hydrogen discharge pipe in fluid communication with the fuel electrode stack mounting portion; and
a hydrogen outlet in fluid communication with the hydrogen discharge pipe via the fuel electrode recuperator,
wherein the fuel electrode recuperator is configured to exchange heat between steam introduced through the steam inlet and hydrogen discharged from the hydrogen discharge pipe.

6. The electrode module of claim 5,
wherein the fuel electrode stack mounting portion includes a steam supply passage and a hydrogen discharge passage fluidly separated from each other, the steam supply passage is configured to connect the steam supply pipe and the steam supply nozzle to each other, and the hydrogen discharge passage is configured to connect the hydrogen discharge nozzle and the hydrogen discharge pipe to each other.

7. The electrode module of claim 6,
wherein each of the steam supply nozzle and the hydrogen discharge nozzle is disposed on an upper surface of the fuel electrode stack mounting portion.

8. An electrode module comprising: an outside air inlet;
an air electrode recuperator in fluid communication with the outside air inlet;
an air electrode electric heater in fluid communication with the air electrode recuperator;
an outside air supply pipe in fluid communication with the air electrode electric heater;
an air electrode stack mounting portion in fluid communication with the outside air supply pipe;
an exhaust air passage in fluid communication with the air electrode stack mounting portion; and
an exhaust air outlet in fluid communication with the exhaust air passage via the air electrode recuperator,
wherein the air electrode recuperator is configured to exchange heat between outside air introduced through the outside air inlet and exhaust air discharged from the exhaust air passage.

9. The electrode module of claim 8,
wherein a plurality of air electrode stack mounting portions are provided, and in this case, the electrode module further includes a plurality of air guides configured to, together with the outside air supply pipe, individually define the plurality of air electrode stack mounting portions.

10. The electrode module of claim 9, further comprising:
a compression rod disposed between two of the air guides adjacent to each other.

11. An electrochemical system comprising: a fuel electrode module including
the electrode module of claim 5;
an air electrode module including the electrode module of claim 8; and
a stack.

12. The electrochemical system of claim 11,
wherein the air electrode module is disposed on the fuel electrode module, and the electrochemical system further includes a pair of side panels disposed on the fuel electrode module to cover respective opposite side surfaces of the air electrode module.

13. The electrochemical system of claim 12,
wherein the air electrode module further includes a compression rod arranged to penetrate both the air electrode module and the fuel electrode module.

14. The electrochemical system of claim 13,
further comprising a first nut coupled to one end of the compression rod toward the air electrode module, a spring coupled to the other end of the compression rod toward the fuel electrode module, and a second nut coupled to the other end of the compression rod to compress the spring.

15. The electrochemical system of claim 11,
wherein the electrochemical system is a solid oxide fuel cell system or a solid oxide water electrolysis system.
